(19) Europäisches Patentamt / European Patent Office / Office européen des brevets

(11) **EP 2 406 694 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(21) Anmeldenummer: **10710265.9**

(22) Anmeldetag: **11.03.2010**

(51) Int Cl.:
**G05D 3/10** *(2006.01)*   **G01S 3/786** *(2006.01)*

(86) Internationale Anmeldenummer:
**PCT/EP2010/053141**

(87) Internationale Veröffentlichungsnummer:
**WO 2010/103090 (16.09.2010 Gazette 2010/37)**

(54) **VERFAHREN ZUM NACHFÜHREN EINES SOLARGENERATORS NACH DER SONNE, STEUERUNG FÜR EINE SOLARANLAGE UND SOLARANLAGE**

METHOD FOR ALLOWING A SOLAR GENERATOR TO TRACK THE SUN, CONTROL FOR A SOLAR SYSTEM AND SOLAR SYSTEM

PROCÉDÉ PERMETTANT LA POURSUITE DU SOLEIL PAR UN GÉNÉRATEUR SOLAIRE, SYSTÈME DE COMMANDE POUR UNE INSTALLATION SOLAIRE ET INSTALLATION SOLAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.03.2009 DE 102009013113**

(43) Veröffentlichungstag der Anmeldung:
**18.01.2012 Patentblatt 2012/03**

(73) Patentinhaber: **Fraunhofer-Gesellschaft zur Förderung der angewandten Forschung e.V. 80686 München (DE)**

(72) Erfinder:
• **BURGER, Bruno 79110 Freiburg (DE)**
• **STALTER, Olivier 67000 Strasbourg (FR)**

(74) Vertreter: **Zimmermann, Tankred Klaus Schoppe, Zimmermann, Stöckeler & Zinkler Patentanwälte Postfach 246 82043 Pullach bei München (DE)**

(56) Entgegenhaltungen:
**US-A- 4 868 379**

**Beschreibung**

Die vorliegende Erfindung bezieht sich auf ein Verfahren zum Nachführen eines Solargenerators nach der Sonne, auf eine Steuerung für eine Solaranlage sowie auf einä'Solatanlage. Insbesondere bezieht sich die vorliegende Erfindung auf einen Ansatz zum Nachführen eines Solargenerators mit einer Mehrzahl von Solarmodulen nach der Sonne basierend auf einer elektrischen Ausgangsgröße zumindest eines Teils der Solarmodule des Solargenerators.

Vorrichtungen zum Nachführen eines Solargenerators auf den aktuellen Sonnenstand, so genannte Tracker, sind im Stand der Technik bekannt, wobei ein Beispiel in der DE 20204679 U1 beschrieben wird. Ferner wird auf die DE 102006058845 B3 verwiesen, die ebenfalls einen solchen Tracker zeigt. Die Antriebe solcher Vorrichtungen führen die Solargeneratoren in Azimut- und/oder Elevationsrichtung derart der Sonne nach, dass eine maximal mögliche Solarstrahlung auf den Solargenerator auftritt. Hierfür umfassen solche bekannten Vorrichtungen einen Sensor, der abhängig von dem darauf einfallenden Licht ein Intensitätssignal erzeugt, welches einer in der Steuereinheit integrierten Schaltung bereitgestellt wird, die ihrerseits ein Steuersignal an einen Antrieb des Trackers weitergibt, um die entsprechende Ausrichtung des Solargenerators auf den hellsten Punkt am Himmel zu bewirken.

Alternativ oder zusätzlich zu dem Sensor kann die Steuerung den Tracker auf der Grundlage der Berechnung von Sonnenephemeriden ansteuern, um eine entsprechende Nachführung des Solargenerators nach der Sonne zu bewirken. Ein solches System ist beispielsweise in der ES 2 273 576 B1 beschrieben.

Solche bekannten Tracker-Systeme versuchen somit, die Ausgangsleistung des Solargenerators dadurch zu optimieren, dass diese der Sonne über den Himmel folgen, um eine maximale Sonnenlichtausbeute zu erhalten. Typischerweise lässt sich durch eine Nachführung des Solargenerators eine Erhöhung der Ausbeute von z.B. +28% in Mitteleuropa bis +54% in Nordeuropa erreichen. Ein Verfahren gemäß dem Oberbegriff des Anspruchs 1 ist aus US 4868379 bekannt.

Die oben beschriebenen, bekannten Ansätze zur Nachführung eines Solargenerators nach der Sonne haben jedoch verschiedene Nachteile. Die Ausführungsform, die einen Sensor zum Erfassen des Sonnenlichts umfasst, ist nachteilhaft, da nur bei klarem Himmel eine ausreichend genaue Positionsbestimmung und entsprechende Ansteuerung des Tracker-Systems möglich ist. Bei Bewölkung sind diese Sensoren weniger hilfreich. Ferner erfordern solche Sensoren eine genaue Montage an dem Solargenerator bzw. bezüglich des Solargenerators und eine entsprechende Kalibrierung. Ferner sind solche Positionssensoren teuer und verschmutzungsanfällig, so dass selbst bei klarem Himmel keine ausreichend genaue Positionsbestimmung und entsprechende Ansteuerung des Tracker-Systems gegeben ist

Auch die Steuerung der Ausrichtung des Solargenerators auf der Grundlage der Berechnung von Sonnenephemeriden ist nachteilhaft. Zwar kann basierend auf den Sonnenephemeriden in Verbindung mit dem Standort des Trackers und der Uhrzeit die Position der Sonne am Himmel mit guter Genauigkeit bestimmt werden, jedoch hängt die Genauigkeit von der Genauigkeit der für die Bestimmung der Position des Solargenerators verwendeten Sensoren und auch von der Genauigkeit der Montage der Solargeneratoren und von deren Justage ab. Ferner verwenden solche Systeme (siehe z.B. die ES 2 273 576 B1) einen offenen Regelkreis, der eine anfängliche Kalibrierung erfordert, z.B. basierend auf einem Sensor oder dem Kurzschlussstrom. Die eigentliche Steuerung der Ausrichtung des Solargenerators während des Tages erfolgt aber nur aufgrund der berechneten Sonnenposition, also ohne ein zurückgeführtes Positionssignal.

Ausgehend von diesem Stand der Technik liegt der vorliegenden Erfindung die Aufgabe zugrunde, einen verbesserten Ansatz zum Nachführen eines Solargenerators nach der Sonne zu schaffen, der unter Vermeidung der oben genannten Nachteile der im Stand der Technik bekannten Vorrichtungen mit reduziertem schaltungstechnischem Aufwand sicherstellt, dass die Solarmodule des Solargenerators im Wesentlichen optimal zur Sonne ausgerichtet sind.

Diese Aufgabe wird durch ein Verfahren gemäß Anspruch 1, eine Steuerung gemäß Anspruch 24 und eine Solaranlage gemäß Anspruch 25 gelöst.

Die vorliegende Erfindung schafft ein Verfahren zum Nachführen eines Solargenerators mit einer Mehrzahl von Solarmodulen nach der Sonne, mit folgenden Schritten:

    Erfassen zumindest einer elektrischen Ausgangsgröße zumindest eines Teils der Solarmodule des Solargenerators; und

    Ansteuern eines Trackers, an dem der Solargenerator angeordnet ist, derart, dass die erfasste elektrische Ausgangsgröße einen vorbestimmten Wert aufweist.

Die vorliegende Erfindung schafft ferner eine Steuerung für eine Solaranlage, mit:

    einen Eingang zum Empfangen eines Wertes einer elektrischen Ausgangsgröße von zumindest einem Teil von Solarmodulen eines Solargenerators der Solaranlage;

    einem Ausgang zum Bereitstellen eines Ansteuersignals für einen Tracker der Solaranlage; und

    einer Verarbeitungseinheit, die nach dem erfindungsgemäßen Verfahren arbeitet.

Die vorliegende Erfindung schafft ferner eine Solaranlage, mit:

einem Solargenerator mit einer Mehrzahl von Solarmodulen;

einem Tracker, an dem der Solargenerator angeordnet ist;

einer Messeinrichtung zum Erfassen einer elektrischen Ausgangsgröße von zumindest einem Teil der Solarmodule des Solargenerators; und

einer erfindungsgemäßen Steuerung.

Im Gegensatz zu dem oben erwähnten, bekannten Stand der Technik lehrt die vorliegende Erfindung einen vorteilhaften und neuartigen Ansatz zum Nachführen eines Solarmoduls nach der Sonne, der die oben beschriebenen Nachteile vermeidet. Erfindungsgemäß kann zum Nachführen eines Solargenerators nach der Sonne auf einen Sonnenpositionssensor verzichtet werden und damit auf die oben erläuterten Probleme im Hinblick auf die Genauigkeit. Auch auf Sonnenephemeriden zur Nachführung des Solargenerators kann verzichtet werden, so dass auch die damit verbundenen Probleme vermieden werden.

Gemäß den Lehren der vorliegenden Erfindung wird das Nachführen auf der Grundlage eines elektrischen Ausgangssignals bzw. einer elektrischen Ausgangsgröße, wie beispielsweise des Stroms, der Spannung und/oder der Leistung, eines Teils der Solarmodule des Solargenerators durchgeführt, vorzugsweise auf der Grundlage einer elektrischen Ausgangsgröße, die von der Gesamtheit aller Solarmodule des Solargenerators erhalten wird. Der Tracker der Solaranlage wird vorzugsweise so gesteuert, dass der vorbestimmte Wert der elektrischen Ausgangsgröße einen maximalen Wert, beispielsweise eine maximale Leistung, annimmt. Das Ansteuern des Trackers bewirkt somit ein Nachführen des Trackers gemäß dem Stand der Sonne.

Gemäß einem bevorzugten Ausführungsbeispiel der vorliegenden Erfindung wird der Tracker anfänglich durch eine Primärpositionierung des Systems an einer Anfangsposition anordnet, bei der der Tracker den Solargenerator basierend auf bekannten Parametern betreffend eine Sonnenposition, z. B. Sonnenephemeriden bewegt. Während einer Bewegung des Trackers beim Nachführen, beispielsweise ausgehend von der Primärpositionierung, von einer ersten Position in eine zweite Position wird ein Wert der elektrischen Ausgangsgröße während eines ersten Abschnitts der Bewegung und während eines zweiten Abschnitts der Bewegung erfasst, vorzugsweise während einer ersten Hälfte des Bewegungsvorgangs und während einer zweiten Hälfte des Bewegungsvorgangs. Die während der zwei Bewegungsabschnitte erfassten Werte der elektrischen Ausgangsgröße werden miteinander verglichen, und basierend auf dem Vergleich wird festgestellt, dass eine Stellung des Trackers, bei der der vorbestimmte Wert für die elektrische Ausgangsgröße vorliegt, noch nicht erreicht wurde, wenn sich die zwei Werte verändern. In diesem Fall wird der Tracker in eine entsprechende Richtung weiterbewegt. Wird alternativ festgestellt, dass der Vergleich anzeigt, dass sich die Werte während der zwei Bewegungsabschnitte nicht ändern bzw. im Wesentlichen nicht ändern, so wird davon ausgegangen, dass die Stellung des Trackers, die nunmehr erreicht ist, den vorbestimmten Ausgangswert, beispielsweise die maximale Leistung, bereitstellt. Vorzugsweise werden die Werte der elektrischen Ausgangsgröße während des ersten und zweiten Abschnitts der Trackerbewegung erfasst. Für dieses Verfahren kann die relativ langsame Sonnenbewegung im Vergleich zur schnellen Trackerbewegung vernachlässigt werden und die relative Trackerposition nur anhand der Trackerbewegung ermittelt werden. Eine Alternative besteht darin, die Werte der elektrischen Ausgangsgröße während des ersten und zweiten Abschnitts des Trackerstillstandes zu erfassen. Für dieses Verfahren gilt nur die Sonnenbewegung als Kriterium für die Ermittlung der relativen Trackerposition. Eine Kombination von beiden Verfahren ist auch möglich.

Vorzugsweise erfolgt eine Bewegung des Trackers schrittweise oder kontinuierlich und während des Verfahrens nach der Sonne vorzugsweise ohne Änderung der Drehrichtung. Im Falle einer schrittweisen Bewegung werden die Schritte abhängig von dem Ergebnis des Vergleichs verkürzt bzw. verlängert bzw. seltener oder öfter bereitgestellt. Ein Ansteuersignal für das Nachführen des Trackers kann eine variable Pulsdauer und eine feste Frequenz bzw. eine feste Pulsdauer und eine variable Frequenz aufweisen. Im Falle einer kontinuierlichen Bewegung des Trackers erfolgt ein Abbremsen bzw. ein Beschleunigen. Hierdurch wird sichergestellt, dass für den Fall, dass die aktuelle Position des Trackers einer Position, bei der eine maximale Leistung erreichbar ist, vorauseilt, durch das Verkürzen bzw. seltenere Ausgeben der Schrittimpulse bzw. durch das Abbremsen die Position der maximalen Leistungsausgabe erreicht wird, da die Sonne gegenüber dem Tracker eher weiter wandert. Ebenso wird im Fall, dass festgestellt wird, dass die Tracker-Position einer Position mit maximaler Leistungsausbeute nacheilt, durch das Verlängern der Schrittpulse bzw. das häufigere Ausgeben derselben bzw. durch das Beschleunigen der Bewegung erreicht wird, dass der Tracker den Ort, bei dem eine maximale Leistungsausgabe vorliegt, erreicht.

Der erfindungsgemäße Ansatz kann mit jeglicher Art von Solargeneratoren verwendet werden, wird vorzugsweise jedoch zusammen mit Solargeneratoren verwendet, die Konzentrator-Solarmodule umfassen, die einen eingeschränkten Akzeptanzwinkel aufweisen und bei denen sich eine Winkelabhängigkeit der ausgegebenen elektrischen Größe in allen Drehrichtungen des Tracker-Systems stark bemerkbar macht.

Weitere, bevorzugte Ausführungsformen der vorliegenden Erfindung sind in den Unteransprüchen definiert.

Nachfolgend werden unter Bezugnahme auf die beiliegenden Zeichnungen bevorzugte Ausführungsbeispiele der vorliegenden Erfindung näher erläutert. Es zeigen:

Fig. 1 ein Ausführungsbeispiel für eine erfindungsgemäß der Sonne nachgeführte Solaranlage mit CPV-Solarmodulen (CPV = Concentrator Photo Voltaic = Konzentrator-Photovoltaik);

Fig. 2 den typischen Verlauf der Ausgangsleistung bzw. des Ausgangsstroms eines Solargenerators mit einem CPV-Tracker über die Winkelabweichung zwischen der Tracker-Richtung und der direkten Sonneneinstrahlung;

Fig. 3 ein Beispiel für einen Bewegungszyklus von Sonne und fokussiertem Tracker in Azimutrichtung (Fig. 3a) mit zugehörigem, zeitlichen Leistungsverlauf (Fig. 3b), und für einen Bewegungszyklus von Sonne und nicht-fokussiertem Tracker in Azimutrichtung (Fig. 3c) mit zugehörigem, zeitlichen Leistungsverlauf (Fig. 3d);

Fig. 4 ein Flussdiagramm des erfindungsgemäßen Verfahrens zum Nachführen eines Solargenerators nach der Sonne gemäß einem Ausführungsbeispiel der vorliegenden Erfindung;

Fig. 5 eine Darstellung der Motordrehzahl bzw. der Tracker-Position während eines Ansteuerimpulses (Fig. 5a) mit zugehörigem Verlauf der Leistung bzw. des Stroms mit symmetrischen Messpunkten (Fig. 5b); und

Fig. 6 ein Beispiel eines zeitlichen Verlaufs von MPPTe und MPPTm für einen zweiachsigen Tracker mit Azimut und Elevation (MPPT = Maximum-PowerPoint-Trakker = Maximalleistungspunkt-Tracker, MPPTe elektrischer MPPT, MPPTm = mechanischer MPPT).

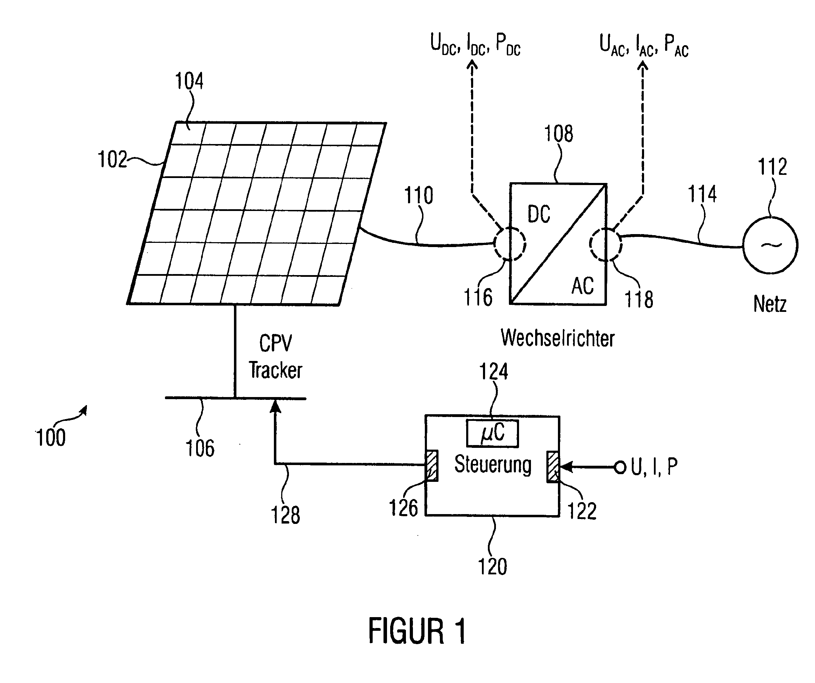

Anhand der Fig. 1 wird nachfolgend ein Ausführungsbeispiel für eine Solaranlage beschrieben, deren Solargenerator auf die erfindungsgemäße Art und Weise der Sonne nachgeführt wird. Die in Fig. 1 gezeigte Solaranlage 100 umfasst einen Solargenerator 102, der wiederum eine Mehrzahl von Solarmodulen 104, vorzugsweise Konzentrator-Solarmodule, umfasst. Der Solargenerator 102 ist auf bekannte Art und Weise auf einer Nachführanlage (einem Tracker) 106 angeordnet. Der Tracker 106 ist in Fig. 1 lediglich schematisch dargestellt und kann durch einen beliebigen, im Stand der Technik bekannten Ansatz realisiert werden. Der Einfachheit halber ist in Fig. 1, wie erwähnt, der Tracker 106 nur schematisch dargestellt, jedoch umfasst der Tracker 106 alle erforderlichen Elemente, um eine Bewegung des Solargenerators 102 für eine Nachführung nach der Sonne, beispielsweise eine Bewegung in Richtung der Elevation und/oder des Azimut, zu ermöglichen.

Die Solaranlage 100 umfasst ferner einen Wechselrichter 108, der über eine leitfähige Verbindung 110 mit dem Solargenerator 102 verbunden ist, wie dies in Fig. 1 schematisch dargestellt ist. Über die leitfähige Verbindung, beispielsweise ein geeignetes Kabel oder ähnliches, wird die durch den Solargenerator erzeugte Leistung an den Wechselrichter 108 abgegeben, der eine Umwandlung des Gleichstroms in einen Wechselstrom durchführt, um die erzeugte Energie einem Netz 112 über eine weitere, leitfähige Verbindung 114 bereitzustellen.

In Fig. 1 sind schematisch zwei Messpunkte 116 und 118 gezeigt. An diesen Messpunkte wird die für die erfindungsgemäße Steuerung zum Nachführen des Solargenerators 102 erforderliche elektrische Messgröße, eine Spannung, ein Strom und/oder einer Leistung, erfasst. Am Messpunkt 116 ist ein Gleichstrommessgerät vorgesehen, welches die Gleichspannung $U_{DC}$, den Gleichstrom $I_{DC}$ und/oder die Gleichleistung $P_{DC}$ erfasst. Am Messpunkt 118 ist alternativ oder zusätzlich ein Messgerät vorgesehen, welches eine Wechselspannung $U_{AC}$, einen Wechselstrom $I_{AC}$ und/oder eine Wechselleistung $P_{AC}$ erfasst (DC = Direct Current = Gleichstrom; AC = Alternating Current = Wechselstrom).

Die erfindungsgemäße Solaranlage 100 umfasst ferner eine Steuerung bzw. Regelung 120, die an einem Eingang 122 die an den Messpunkten 116 und/oder 118 erfassten elektrischen Messgrößen, also eine Spannung, einen Strom und/oder eine Leistung, empfängt. Die Steuerung 120 umfasst eine Verarbeitungseinheit 124, beispielsweise einen Mikrocontroller oder einen Computer, der in der Lage ist, basierend auf den am Eingang 122 empfangenen Signalen ein Ausgangssignal zum Ansteuern des Trackers 106 zu erzeugen und am Ausgang 126 der Steuerung für eine Übertragung an den Tracker 106 über die Verbindung 128 bereitzustellen. Die Steuerung bildet somit einen Regler bzw. Leistungsregler, der bewirkt, dass die Solaranlage im Bereich einer maximalen Leistung arbeitet, wobei die Regelung ausgelegt ist, um den Tracker so nachzuführen, dass eine maximale Leistung erhalten wird oder dass die von der Solaranlage ausgegebene Leistung innerhalb eines vorbestimmten Leistungsbereichs (Fenster) ist.

Das anhand der Fig. 1 beschriebene, erfindungsgemäße Systems ermöglicht eine sensorlose Regelung zur Leistungsmaximierung eines Solargenerators unter Verwendung eines mechanischen Trackers, wobei der Solargenerator vorzugsweise eine konzentrierte Photovoltaikanlage ist, also Konzentrator-Solarmodule umfasst. Erfindungsgemäß werden nur die elektrischen Größen der Solaranlage 100 (Photovoltaik-Tracker-System) für das Nachführen nach der Sonne genutzt, nämlich die in Fig. 1 gezeigten Spannungen, Ströme und/oder Leistungen.

Gemäß einem bevorzugten Ausführungsbeispiel können die gerade erwähnten elektrischen Ausgangsgrößen, also die Spannung, der Strom und/oder die Leistung, nur von einem Teil des Solargenerators 102, also nur von einzelnen oder auch nur von einem der Solarmodule 104, verwendet werden. Alternativ kann vorgesehen sein, die Ausgangsgröße des gesamten Solargenerators 102 für das Tracking zu verwenden. Die Optimierung der Nachführung auf der Grundlage der vom Gesamtsystem 102 ausgegebenen elektrischen Ausgangsgröße wird bevorzugt, da hierdurch eine Maximierung der durch den Solargenerator 102 ausgegebenen Gesamtleistung ermöglicht wird.

An den Messpunkten 116 und/oder 118 werden die erwähnten elektrischen Größen erfasst, wobei hierfür entweder der ohnehin vorhandene Wechselrichter 108 herangezogen werden kann. Alternativ kann ein getrenntes Messgerät die elektrische Ausgangsgröße an dem Solargenerator, an dem Wechselrichter oder an einer anderen geeigneten Stelle innerhalb der Solaranlage 100 erfassen. Tatsächlich können die elektrischen Größen an jeder beliebigen Stelle im Leistungsfluss gemessen werden, beispielsweise am Ein- und/oder am Ausgang des Wechselrichters, wie dies in Fig. 1 gezeigt ist.

Ein Vorteil der vorliegenden Erfindung besteht darin, dass kein zusätzlicher Sonnenpositionssensor für das Tracking erforderlich ist. Vorzugsweise wird die Positionsinformation alleine durch die elektrischen Größen gewonnen. Entsprechend der vorliegenden Erfindung wird vorzugsweise eine maximale elektrische Leistung P des Solargenerators 102 anhand seiner relativen Position zur direkten Sonneneinstrahlung für jede Drehachse des PV-Tracker-Systems 106 gesucht. Der Strom I und/oder die Leistung P werden hierfür vorzugsweise als Positionskriterium genutzt. Der erfindungsgemäße Ansatz ist für beliebige Solargeneratoren mit beliebigen Solarmodulen einsetzbar. Vorzugsweise wird der erfindungsgemäße Ansatz bei Solargeneratoren 102 eingesetzt, die Konzentratorzellen 104 aufweisen. Da Konzentratorzellen einen eingeschränkten Akzeptanzwinkel haben, werden die elektrischen Größen I und P (Strom und Leistung) sehr stark von der relativen Position des Solargenerators 102 zu Sonne beeinflusst. In der Regel macht sich diese Winkelabhängigkeit von Strom und Leistung auf alle Drehrichtungen des Tracker-Systems bemerkbar. Die Steuerung bzw. Regelung der Leistungsmaximierung wird deshalb vorzugsweise unter Verwendung von mehreren Motoren bzw. Drehachsen des Trackers 106 das so genannte "mechanische Leistungsmaximum" suchen. An dieser Stelle sei darauf hingewiesen, dass der Begriff "mechanisches Leistungsmaximum" angibt, dass die maximale Leistung des Solargenerators basierend auf der mechanischen Ausrichtung des Solargenerators 102 bezüglich der Sonne unter Verwendung des Trackers 106 definiert ist.

Der Begriff "mechanisches Leistungsmaximum" wird zur Abgrenzung vom Begriff des "elektrischen Leistungsmaximums" verwendet, welches unter Verwendung des sogenannten MPPT (MPPT = Maximum-

PowerPoint-Tracker = Maximalleistungspunkt-Tracker) erreicht wird. Hierbei handelt es sich um eine elektronische Nachführung, die nichts mit der Bewegung des Solargenerators 102 zu tun hat. Tatsächlich wird beim MPPT eine elektronische Leistungsmaximierung durchgeführt, deren Ziel es ist, die Spannung und den Strom von dem Solargenerator 102 so einzustellen, dass deren Produkt maximal ist. Das MPPT für eine elektrische/elektronische Leistungsmaximierung ist in Fachkreisen bekannt. Die Unterscheidung zwischen der mechanischen Leistungsmaximierung gemäß der vorliegenden Erfindung und der elektronischen Leistungsmaximierung gemäß dem MPP-Tracking wird später noch näher erläutert.

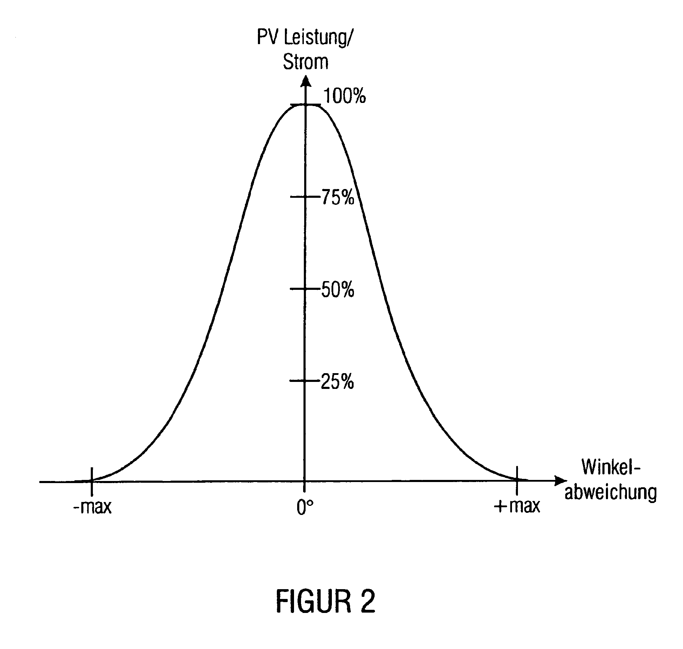

Fig. 2 zeigt den typischen Leistungsverlauf eines CPV-Trackers 106 über der Winkelabweichung zwischen der Tracker-Einrichtung und der direkten Sonneneinstrahlung. Wie zu erkennen ist, weisen insbesondere Konzentratorzellen das Maximum ihrer elektrischen Leistung bei 0° Abweichung zwischen der direkten Sonneneinstrahlung und der Tracker-Richtung auf, so dass dieses als Ziel für die erfindungsgemäße Regelung verwendet wird. Andere Solarmodule, die keine Konzentratorzellen verwenden, können andere Leistungsverläufe aufweisen, wobei diese beispielsweise breiter sind, jedoch befindet sich im Regelfall das Maximum der Leistung des Solargenerators 102 bzw. eines entsprechenden Solarmoduls bei einer minimalen Winkelabweichung.

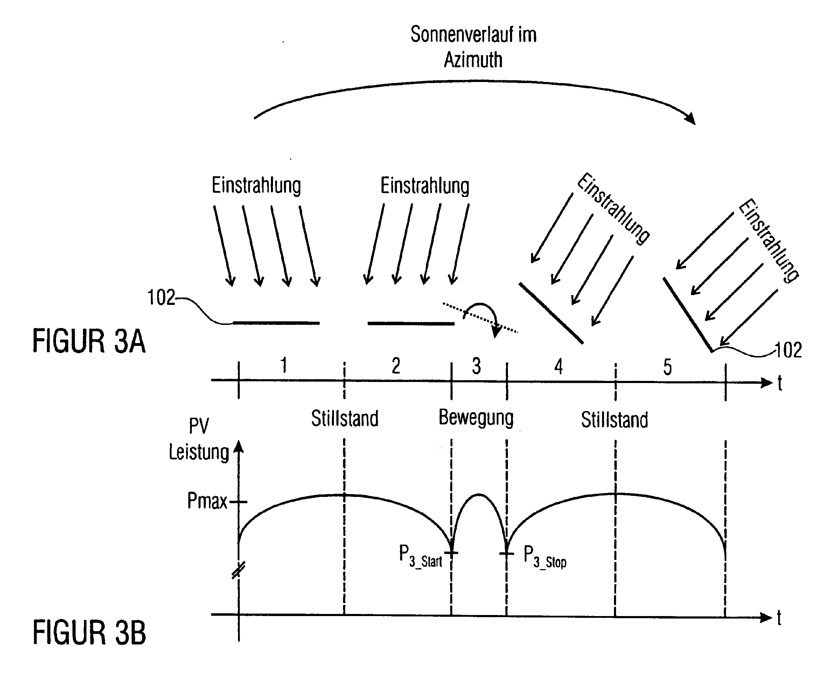

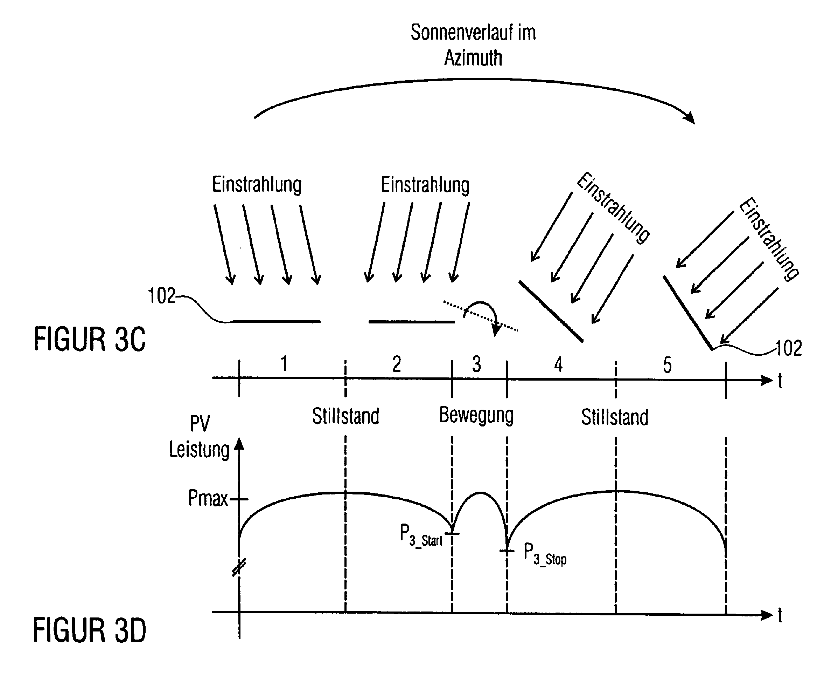

Gemäß der vorliegenden Erfindung erfolgt die Überprüfung, ob sich der Tracker und damit der Solargenerator 102 innerhalb eines erlaubten Fokuswinkelfensters befindet, während des Stillstands des Trackers zwischen Bewegungsabschnitten des Trackers und/oder während des Verfahrens des Trackers. Im erlaubten Fokuswinkelfenster ist die vom Solargenerator erzeugte Ausgangsleistung in einem maximalen Bereich. Falls die Positionsregelung mit Impulsantrieb arbeitet, wird als Regelziel definiert, dass jeder Tracker-Impuls bzw. jede Tracker-Bewegung sich symmetrisch zum Maximum der Leistung befinden soll, so dass jede Drehrichtung des Trackers tagsüber immer um den maximalen Leistungspunkt pendelt, wie dies aus Fig. 3 zu erkennen ist, die ein Beispiel für einen Bewegungszyklus von Sonne und fokussiertem Tracker in Azimutrichtung (Fig. 3a) mit zugehörigem, zeitlichen Leistungsverlauf (Fig. 3b), und einen Bewegungszyklus von Sonne und nicht-fokussiertem Tracker in Azimutrichtung (Fig. 3c) mit zugehörigem, zeitlichen Leistungsverlauf (Fig. 3d) zeigt.

Wie aus Fig. 3(a) und Fig. 3(b) zu entnehmen ist, befindet sich der Solargenerator während der Zeitabschnitte 1 und 2 in einem entsprechenden Winkelfenster, und die durch den Solargenerator 102 erzeugte Ausgangsleistung (siehe Fig. 3(b)) ist in einem zulässigen Bereich um den Maximalwert. Am Ende des Zeitabschnitts 2 sinkt die Leistung auf einen Wert ab, der außerhalb des erlaubten Bereichs liegt, so dass während des Zeitpunkts 3 eine Bewegung des Trackers veranlasst wird, bis eine in den Abschnitten 4 und 5 gezeigte Position des Trackers bzw. des Solargenerators 102 erreicht wird, bei der für einen bestimmten Zeitabschnitt des Sonnenverlaufs eine Ausgangsleistung erreicht wird, die innerhalb eines vorbestimmten Bereichs um die maximale Leistung liegt.

Mit anderen Worten wird in den Zeitabschnitten 1 und 2 basierend auf der Ausgangsleistung des Solargenerators 102 unter Zugrundelegung der erfindungsgemäßen Steuerung festgestellt, dass die Ausgangsleistung innerhalb eines zulässigen Bereichs (bestimmt durch einen vorbestimmten Prozentsatz der bei der momentanen Einstrahlung erreichbaren maximalen Leistung) zwischen $P_{3\_start}$ und $P_{max}$ liegt, so dass eine Nachführung nicht erforderlich ist. Am Übergang vom Zeitabschnitt 2 auf den Zeitabschnitt 3 wird festgestellt, dass die Leistung den zulässigen Bereich verlassen hat, so dass eine Bewegung des Trackers erforderlich ist, bis die Leistung den zulässigen Bereich zwischen $P_{3\_stop}$ und $P_{max}$ wieder erreicht hat. Anschließend verbleibt der Tracker in der neu gefundenen Position, wie dies in den Zeitabschnitten 4 und 5 dargestellt ist. Wenn der Tracker symmetrisch zum Fokuspunkt pendelt, so gilt $P_{3\_start} = P_{3\_Stop}$, wie dies in Figuren 3(a) und 3(b) dargestellt ist.

Wenn der Tracker aber defokussiert ist, so ist $P_{3\_start}$ ungleich $P_{3\_stop}$ ($P_{3\_start} > P_{3\_stop}$), wie dies in dargestellt ist. Die Figuren 3(c) und 3(d) stellen eine Situation dar, in der der Tracker der Sonne voreilt. Wenn aber gilt, dass $P_{3\_start} < P_{3\_stop}$, dann zeigt dies an, dass der Tracker der Sonne nacheilt. Der erfindungsgemäße Ansatz bewirkt in solchen Situationen eine Ansteuerung des Trackers, die zu einer Bewegung des Trackers führt, so dass gilt $P_{3\_start} = P_{3\_stop}$.

Fig. 3 zeigt eine Positionsregelung durch schrittweises Bewegen des Trackers, jedoch kann die Positionsregelung auch auf einem kontinuierlichen Verfahren basieren. In diesem Fall muss die Winkelgeschwindigkeit jedes Motors des Trackers so eingestellt werden, dass dieser jederzeit im Maximum bzw. im zulässigen maximalen Bereich der elektrischen Leistung angeordnet ist, was beispielsweise dadurch erreicht werden kann, dass die Motordrehzahl entsprechend variiert wird, wodurch ein ähnlicher Leistungsverlauf wie bei der gepulsten Variante gemäß Fig. 3 erreicht wird. Die Messwerterfassung erfolgt vorzugsweise mit einer sehr hohen Auflösung, so dass bei der gepulsten Variante die Impulsamplitude in der Regel sehr kurz gehalten wird. Aus diesem Grund ist die relative Leistungsschwankung zwischen Stillstand und Tracking-Zyklus sehr gering und liegt bei weniger als 0,1 % der bei der momentanen Einstrahlung erreichbaren maximalen Leistung.

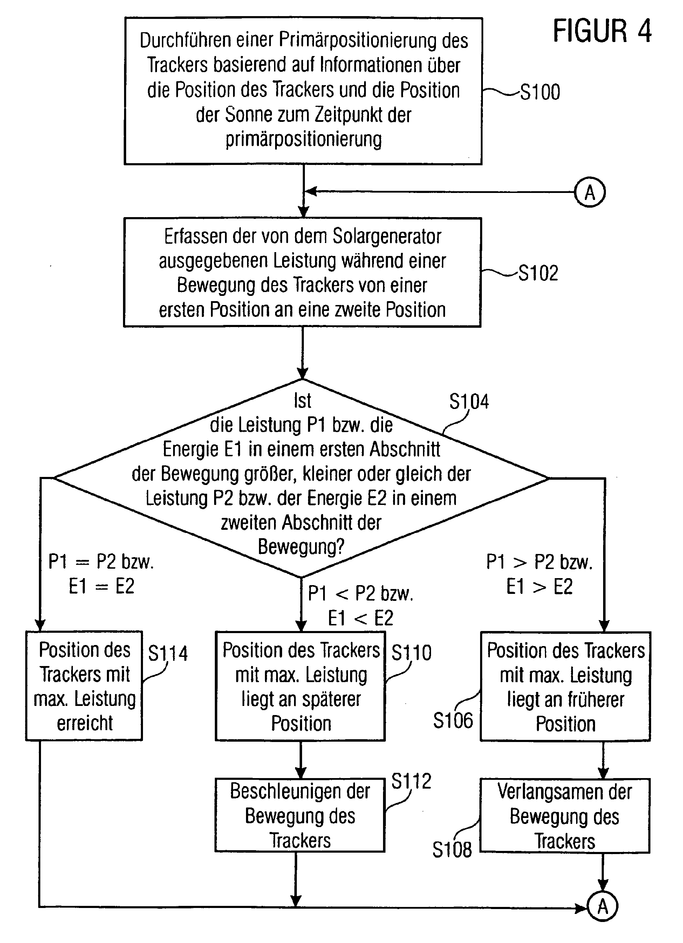

Nachfolgend wird anhand der Fig. 4 das erfindungsgemäße Verfahren gemäß einem bevorzugten Ausführungsbeispiel anhand eines Flussdiagramms näher erläutert. In einem ersten, anfänglichen Initialisierungsschritt S100 wird eine Primärpositionierung des Trackers basierend auf Informationen über die Position des Trackers und die Position der Sonne zum Zeitpunkt der Primärpositionierung durchgeführt. Dies kann beispielsweise mittels einer astronomischen Berechnung der Sonnenposition erfolgen. Da im Zusammenhang mit Solargeneratoren, die Konzentrator-Solarmodule umfassen, das Winkelakzeptanzfenster sehr gering ist, sollte diese Primärpositionierung bei einer solchen Ausgestaltung des Solargenerators hinreichend genau sein, damit die elektrischen Größen der Zelle bzw. des kompletten Solargenerators vorliegen, so dass eine entsprechende erfindungsgemäße Leistungsmaximierung, wie sie nachfolgend näher erläutert wird, stattfinden kann. Die Genauigkeit der Primärpositionierung sollte mindestens das Erreichen des Winkelakzeptanzfensters der Solarmodule erlauben, ab dem die elektrischen Größen vorliegen (z.B. +/-2,5° für CPV ohne sekundäre Optik, +/-5° für CPV mit sekundärer Optik, +/-10° für Low CPV).

Die Primärpositionierung ist vorgesehen, um den generellen Betrieb und auch das Nachführen der Sonne im Falle von schlechten Wetterbedingungen zu gewährleisten. Es gilt allgemein, dass, je präziser die Primärpositionierung ist, desto höher ist die leistungsoptimierte Träcking-Effizienz. Ein Beispiel zur Erhöhung der Primärpräzision besteht darin, Störphänomene, wie z. B. die Verkippung des Turms bzw. des Mastes des Trakkers, an dem der Solargenerator angeordnet ist, zu berücksichtigen. Eine Mastverkippung von 1 Grad wirkt sich beispielsweise auf die primäre Positionsgenauigkeit auch mit 1 Grad Amplitude aus. Eine Kompensation dieser Verkippung erlaubt eine effizientere leistungsoptimierte Positionierung, da die Abweichung der primären Positionierung zur Sonne kleiner ist, und somit das mechanische Suchfenster zum Punkt der maximalen Leistung geringer wird.

Bei anderen Ausführungsbeispielen, bei denen eine hochpräzise Primärpositionierung zu aufwendig ist bzw. nicht erwünscht ist, ist auch eine grobe Positionierung des Trackers ausreichend, um die erfindungsgemäße Leistungsmaximierung durchführen zu können. Unabhängig vom leistungsoptimierten Tracking kann die Primärpositionierung auch astronomisch (Berechnung der Ephemeriden) oder unter Verwendung eines Sonnenpositionssensors durchgeführt werden. Alternativ kann auch mit einfachen Näherungsfunktionen gearbeitet werden, um die Sonnenbahn zu interpolieren. Nach der Durchführung der oben beschriebenen Primärpositionierung wird gemäß dem bevorzugten Ausführungsbeispiel die von dem Solargenerator ausgegebene Leistung während einer Bewegung des Trackers von einer ersten Position an eine zweite Position erfasst, wie dies im Schritt S102 beschrieben ist. Anschließend wird die in einem ersten Abschnitt der Bewegung erfasste Leistung P1 mit einer im zweiten Abschnitt der Bewegung erfassten Leistung P2 verglichen, um zu bestimmen, ob die Leistungen gleich sind oder ob die Leistung P1 größer oder kleiner als die Leistung P2 ist, wie dies im Schritt S104 gezeigt ist.

Ist die Leistung P1 größer als die Leistung P2, so ist die Position des Trackers 106 mit einer maximalen Leistung an einer früheren Position, d. h. der Tracker wurde bereits an der Position für eine maximale Leistung vorbeibewegt, wie dies im Schritt S106 erläutert ist. In einer solchen Situation wird im Schritt S108 die Bewegung des Trackers verlangsamt. Ist die Leistung P1 kleiner als die Leistung P2, so bedeutet dies, dass die Position der maximalen Leistung noch nicht erreicht ist, wie dies im Schritt S110 gezeigt ist, so dass die Bewegung des Trackers im Schritt S112 beschleunigt wird. Wird festgestellt, dass die zwei Leistungen gleich sind, so wird bestimmt, dass die Position der maximalen Leistung erreicht ist, wie dies im Schritt S114 dargelegt ist. Ausgehend von den Schritten S108, S112 und S114 kehrt das Verfahren dann zum Schritt 102 zurück. An dieser Stelle sei darauf hingewiesen, dass erfindungsgemäß bestimmt werden kann, ob z.B. eine von der Solaranlage erzeugte Leistung kleiner als eine, größer als eine oder gleich einer maximalern Leistung ist. Alternativ kann aber auch vorgesehen sein (siehe z.B. Fig. 3), zu bestimmen, ob eine von der Solaranlage erzeugte Leistung innerhalb eines vorbestimmten Leistungsbereichs oder -fensters oder außerhalb des vorbestimmten Leistungsbereichs oder -fensters (oberhalb oder unterhalb des Bereichs) liegt. Sofern in der nachfolgenden Beschreibung auf einen Vergleich mit einem Wert einer Ausgangsgröße Bezug genommen wird, umfasst dies stets auch eine Bezugnahme auch ein entsprechendes Fenster und umgekehrt.

Gemäß dem anhand der Fig. 4 in den Schritten S104 - S114 beschriebenen Ausführungsbeispiel wird vorzugsweise während jedes Motorimpulses die elektrische Leistung oder der Strom des Solargenerators mit einer hoch aufgelösten Messwerterfassung zu regelmäßigen Zeit- oder Positionsabständen gemessen. Die Leistungs- bzw. Strommessung erfolgt synchron mit der physikalischen Tracker-Bewegung und kann entweder auf die Laufzeit des Motors des Trackers oder auf die mit Impulsgebern erfasste gefahrene Strecke des Trackers bezogen werden.

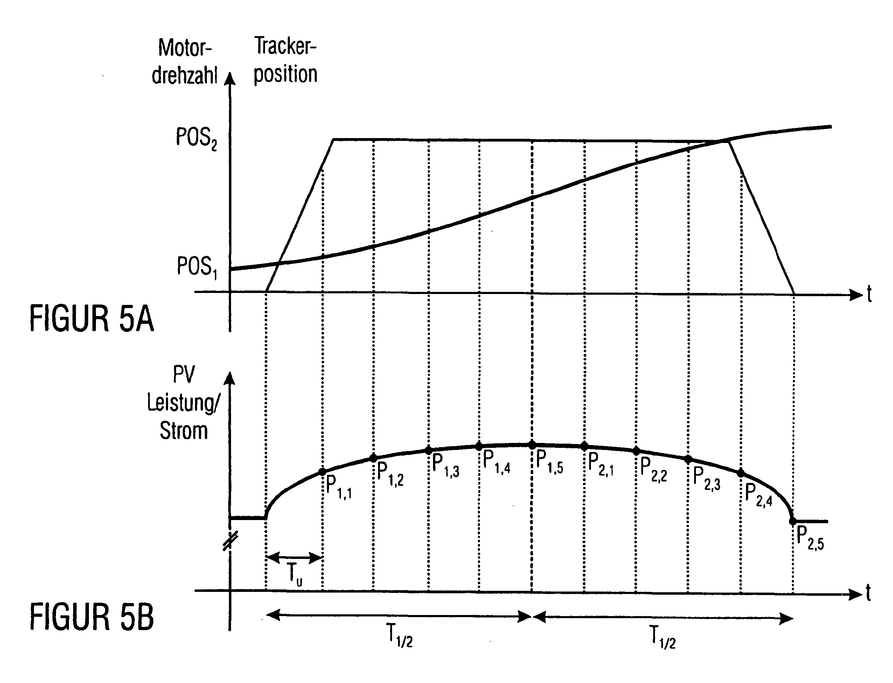

Ein Beispiel zur Bestimmung der relativen Position einer Drehachse des Trackers zur Sonne besteht darin, den Motoransteuerimpuls in zwei symmetrische Zeit-, Position- oder Motordrehzahlbereiche aufzuteilen, wie dies anhand der Fig. 5 gezeigt ist, die die Motordrehzahl bzw. Tracker-Position während eines Ansteuerimpulses in Fig. 5a zeigt. Fig. 5b zeigt den zugehörigen Leistungsverlauf mit symmetrischen Messpunkten.

Wie in Fig. 5 gezeigt ist, wechselt die Tracker-Position von einer ersten Position $POS_1$ durch entsprechende Betätigung des Motors auf eine Position $POS_2$, und der Bewegungsablauf wird in zwei, vorzugsweise gleiche Teile $T_{1/2}$ (siehe Fig. 5b) unterteilt. Für jeden der Teilabschnitte $T_{1/2}$ werden die Leistungswerte an verschiedenen Abtastpunkten erfasst, nämliche die Leistungen $P_{1,1}$ - $P_{1,5}$ für den ersten Abschnitt bzw. für die erste Hälfte des Bewegungszeitraums und $P_{2,1}$ - $P_{2,5}$ für die zweite Hälfte des Bewegungszeitraums. Das Produkt von regelmäßigen Leistungs- oder Strommesswerten mit der seit der letzten Messung abgelaufenen Zeitdauer ergibt einen Energiemittelwert. Bildet man die Summe bzw. das Integral dieser regelmäßigen Energiemittelwerte für jede Impulshälfte (siehe Fig. 5), so erhält man zwei Energiewerte, die miteinander verglichen werden können. Vorzugsweise werden die Leistung bzw. der Strom mit einer festen Frequenz und synchron zur Motorbewegung gemessen, so dass die gerade erwähnte Zeit einfach weggelassen werden kann und nur die Leistungs- bzw. Strommittelwerte miteinander verglichen werden. In diesem Fall kann die Summe durch die Anzahl der Messpunkte (in Fig. 5 die Anzahl der fünf Messpunkten) dividiert werden. Alternativ kann ein erster Leistungs- oder Strommesswert und ein zweiter Leistungs- oder Strommesswert pro Impulshälfte gemessen werden, sofern diese symmetrisch zu Impulsmitte erfasst werden.

Für das anhand der Fig. 5 gezeigte Beispiel ergibt sich die mittlere elektrische Leistung jeder Impulshälfte wie folgt: erste Impulshälfte:

$$\overline{P_1} = \frac{1}{n} \sum_{1}^{n} P_{1,i}$$

zweite Impulshälfte:

$$\overline{P_2} = \frac{1}{n} \sum_{1}^{n} P_{2,i}$$

Die Anzahl der Messpunkte n jeder Impulshälfte ist von der Impulslänge und von der Messfrequenz abhängig, wobei bei dem in Fig. 5 gezeigten Beispiel n = 5 ist.

Während des in Fig. 5 gezeigten Motorimpulses können prinzipiell drei unterschiedliche Fälle auftreten, nämlich:

a. die Leistung wird größer:

$$\overline{P_1} < \overline{P_2}$$

b. die Leistung wird kleiner:

$$\overline{P_1} > \overline{P_2}$$

c. die Leistung bleibt unverändert:

$$\overline{P_1} = \overline{P_2}.$$

Je nachdem, welcher dieser drei Fälle vorkommt, kann erkannt werden, ob der maximale Leistungspunkt entweder weiter vorwärts liegt (a) oder eher rückwärts liegt (b), oder ob man sich bereits im Maximum der Leistung befindet (c). Wie oben erwähnt, kann die Feststellung auch darauf basieren, wie die Leistung bzgl. eines Bereichs oder Fensters liegt (siehe oben).

Eine Alternative zu der gerade beschriebenen Messung besteht darin, die Energien während der Impulshälften zu erfassen. Die Energie jeder Impulshälfte ergibt sich wie folgt:

erste Impulshälfte:

$$E_1 = \Delta t \sum_1^n P_{1,i}$$

zweite Impulshälfte:

$$E_2 = \Delta t \sum_1^n P_{2,i}$$

mit $\Delta t$ = Dauer der jeweiligen Impulshälfte

Eine weitere Alternative zu der oben beschriebenen Messung der Leistung besteht darin; die Ableitung der elektrischen Leistung während des Impulses zu berechnen. Sollte sich das Vorzeichen dieser Ableitung während des Ansteuerimpulses ändern, bedeutet dies, dass das Maximum der Leistung erreicht wurde. Bleibt das Vorzeichen der Ableitung immer positiv, nimmt die Leistung zu (Fall a), bzw. im Fall, dass es immer negativ bleibt, wird die Leistung kleiner (Fall b).

Fig. 5 ist eine vergrößerte Darstellung des Abschnitts 3 aus Fig. 3. Fig. 5 stellt dar, wie die wichtigen Größen wie z.B. Motordrehzahl, Geberimpulse und PV-Leistung sich während der Tracker-Bewegung verhalten. Zusätzlich sind noch die Leistungs- bzw. Strommesspunkte eingetragen, wobei bei dem gezeigten Ausführungsbeispiel jeder gezeigte Punkt der Mittelwert aus mehreren Messungen ist. Der Punkt $P_{1,2}$ ist z.B. der Mittelwert aus 3333 Leistungs- bzw. Strommessungen zwischen $P_{1,1}$ und $P_{1,2}$ (33,33kHz Messfrequenz während 100ms).

Vorzugsweise erfolgt die Erfassung der Leistung unter Verwendung einer hochaufgelösten Leistungsmessung. Aufgrund der Tatsache, dass die elektrische Leistung des Solar-Trackers über die Winkelabweichung zur Sonne (siehe Fig. 2) im Leistungsmaximum sehr flach ist, ändert sich die Leistung nur um wenige Watt über einen bestimmten Positionsbereich. Um eine präzise Leistungserfassung für jede Drehachse gewährleisten zu können, müssen daher sehr geringe Leistungs- bzw. Stromänderungen gemessen werden. Infolgedessen muss die Strom- bzw. Spannungsmessschaltung eine sehr hohe Auflösung haben. Als Größenordnung gilt, dass Leistungsänderungen im Bereich von etwa 1/10.000 bis 1/100.000 der Nennleistung detektiert werden müssen, um ein optimales Tracking/Nachführen zu ermöglichen.

Ein normaler Stromwandler und der zugehörige A/D-Wandler haben im Falle einer digitalen Regelung eine typische Auflösung von ca. 10 Bits. Die Nennleistung eines typischen Solar-Trackers liegt bei ca. 10 kW, so dass sich eine Leistungsauflösung von etwa 10 W/Bit ergibt, was einen Faktor 100 höher ist als die erforderliche Genauigkeit von 0,1 W. Dieses Problem kann jedoch durch eine zeitlich Überabtastung der benötigen Messgrößen U, I gelöst werden, wodurch eine höhere Auflösung erreicht werden kann. Gemäß dem Nyquist-Shannon-Theorem ist das Überabtastungsverhältnis (Over-Sampling ratio OS) mit der Auflösungserhöhung in Bits durch folgende Gleichung verbunden:

$$OS_{RATIO} = 2^{2 \cdot (B_2 - B_1)}$$

wobei:

$B_1$ = Auflösung der normalen Messung in Bits, und
$B_2$ = resultierende Auflösung in Bits einer Reihe von Einzelmessungen mit der Auflösung $B_1$.

Die Anzahl der benötigten Messpunkte, um die Auflösung $B_2$ zu erreichen, ist in $OS_{RATIO}$ enthalten. Im vorliegenden Beispiel ist die maximale Anzahl der Messpunkte auf 3333 begrenzt, so dass sich die resultierende Bit-Auflösung wie folgt berechnet:

$3333 = 2^{(2*(x-10))}$, was x=15,85 (nahezu 16 Bits) ergibt.

Es sei angenommen, dass die Frequenz der Messwerterfassung 33,33 kHz ist. Unter der Annahme, dass über eine Gesamtzeitdauer von 100 ms Messwerte erfasst werden, erhält man 3.333 Messwerte. Dies bedeutet, dass die ursprüngliche Auflösung von 10 Bits bei 33,33 kHz in einer Neuauflösung von ca. 16 Bits bei 10 Hz transformiert wurde. Obwohl nun eine reduzierte Aktualisierungsrate der Messgröße vorliegt, ist die neue Auflösung entsprechend dem oben genannten Beispiel ca. 0,15 W/Bit, was nahezu der geforderten Auflösung entspricht. Ferner ist darauf hinzuweisen, dass die Aktualisierungsrate von 100 ms ausreichend ist, da die Zeitkonstante der Leistungsänderung über die Einschaltdauer des Motors typischerweise höher ist. Es existieren ausreichend Messpunkte während eines Ansteuerimpulses, um das oben erwähnte Regelungsprinzip, gemäß die zwei Bewegungshälften betrachtet werden, anzuwenden.

Durch die oben beschriebene bevorzugte Vorgehensweise wird verhindert, dass aufwendige und teure Bauteile wie Strom- und Spannungswandler mit erhöhter Messauflösung eingesetzt werden müssen. Erfindungsgemäß wird hiermit unter Zugrundelegung einer normalen Messeinrichtung eines Wechselrichters eine sehr hohe Messgenauigkeit erreicht, die beim obigen Beispiel 65 mal erhöht ist.

Die oben beschriebene Erfassung der relativen Tracker-Position zur Sonne unter Zugrundelegung der elektrischen Leistung stellt eine Rückkopplung in Bezug auf die primäre Tracker-Positionierung dar, die unter Zugrundelegung der auf die erfindungsgemäße Art und Weise erhaltenen Informationen korrigiert werden kann. Mit anderen Worten kann ausgehend von der Primärpositionierung abhängig von dem Verhältnis der Leistung P1 im ersten Abschnitt der Bewegung zur Leistung P2 im zweiten Abschnitt der Bewegung der Tracker langsamer oder schneller bewegt werden, um einen Bereich maximaler Leistung zu erreichen. Wird auf eine Primärpositionierung verzichtet, legt man die aufgrund des Vergleichs der Leistungen erhaltenen Informationen direkt an den Leistungsregler (Steuerung 120) an, und man würde beispielsweise die Länge jedes nachfolgenden Motorimpulses (Pulsdauer) kürzen bzw. vergrößern, je nachdem, welcher der in den Schritten S106 und S110 angegebenen Fälle gegeben ist.

Im Falle einer Rückkopplung unter Zugrundelegung einer primären Regelung (Primärpositionierung) erfolgt die Korrektur der Tracker-Position nach einem vorbestimmten Algorithmus, der bei jedem Motorimpuls das gemäß den Schritten S106 und S110 ergebene Ergebnis analysiert und eine entsprechende Vorgehensweise zur Leistungsmaximierung definiert. Beispielsweise können feste Korrekturschritte auf die primären Ist- bzw. Soll-Positionen aufaddiert werden, damit die primäre Regelung ihre Verspätung bzw. ihren Vorsprung korrigiert. In diesem Fall sollte die Größe des Korrekturschrittes ein Kompromiss zwischen der Dauer des Suchverfahrens und der gewünschten Positionsgenauigkeit im Dauerbetrieb sein. Je kleiner der Korrekturschritt ist, desto besser ist die Positionsgenauigkeit, aber desto länger ist die Suchdauer bis zum Auffinden des maximalen Leistungspunktes bzw. Leistungsbereichs.

Alternativ können auch variable Korrekturschritte zu den primären Positionen aufaddiert werden. In diesem Fall kann die Größe des Korrekturschritts auf die ermittelte Distanz zum Punkt der maximalen Leistung abgestimmt werden. Sollte der Vergleich der Leistungen einen großen Unterschied zwischen P1 und P2 zeigen, würde ein dementsprechend großer Korrekturschritt hervorrufen. Vorzugsweise wird die Amplitude der Korrektur in diesem Fall proportional zum Betrag der Differenz (P2 - P1) definiert. Dies ermöglicht im Bereich der maximalen Leistung eine feine Regelung mit kleinen Korrekturschritten, um so nah wie möglich an das Maximum heranzukommen.

Unabhängig von der Amplitude ist das Vorzeichen des Korrekturschritts abhängig von dem Vorzeichen der Differenz (P2 - P1). Falls diese Differenz positiv ist, wird der Tracker durch die Regelung (Steuerung 120) weiter vorausfahren. In diesem Fall wird entweder ein positiver Korrekturschnitt zur Soll-Position oder ein negativer Korrekturschritt zur Ist-Position aufaddiert. Falls die Differenz negativ ist, ist es genau umgekehrt.

Für eine höhere Zuverlässigkeit des Algorithmus können weitere Kontrollschritte eingeführt werden. Eine Variante besteht darin, die Positionsinformationen, die auf die erfindungsgemäße Art und Weise erhalten wurden, ein- oder mehrmals zu überprüfen, um sicherzugehen, dass die relative Position des Trackers zur Sonne richtig ermittelt wurde, bevor der Korrekturschritt erzeugt wird. Diese Korrekturen können beispielsweise auf weiteren Parametern betreffend die Sonnenposition, beispielsweise auf Sonnenephemeriden, basieren, um beispielsweise eine Plausibilitätsüberprüfung der erfassten Position herbeizuführen. Genauer gesagt kann aufgrund der Sonnenephemeriden überprüft werden, ob die Lage des Trackers tatsächlich eine maximale Sonneneinstrahlung zulässt.

Ein weiterer Kontrollschritt kann darin bestehen, den gesamten Winkelakzeptanzbereich des Solargenerators, z.B. 2,5°x2,5° eines Solargenerators mit Konzentratorsolarzellen, regelmäßig, z. B. einmal pro Stunde, zu durchfahren, was sicherstellt, dass ein erfasstes Leistungsmaximum kein lokales Maximum ist. Nachteil dieser Vorgehensweise ist allerdings, dass hier ein kurzfristiger Leistungseinbruch stattfindet. Ferner sollte eine solche Vorgehensweise mit Rücksicht auf die Anfälligkeit des Systems gegenüber sekundären Einstrahlungsquellen definiert werden.

Gemäß bevorzugten Ausführungsbeispielen der vorliegenden Erfindung kann das Suchfenster zur Leistungsmaximierung je nach Größe des Winkelakzeptanzfensters der Solarzellen und des möglichen Positionsfehlers der primären Regelung eingeschränkt werden. Hierdurch kann verhindert werden, dass die Korrektur (Summe von vielen Korrekturschritten) von einer bestimmten Drehachse zu hohe Werte erreicht. Ist die Positionsgenauigkeit der primären Regelung +/-1,5°, so kann das Suchfenster mit einer gewissen Toleranz auf z. B. 1° begrenzt werden.

Sollte die elektrische Leistung oder der Strom des Photovoltaik-Systems zu gering sein, so wird der bisher beschriebene Algorithmus angehalten. Befindet sich die Systemleistung unter einem bestimmten Minimalwert, z. B. 5 % der Nennleistung, gibt es immer mehr Risiken, dass die Informationen, auf denen der erfindungsgemäße Ansatz basiert, nicht mehr zuverlässig sind. Kleinere Werte der Leistung können zwei Ursachen haben:

- Die Einstrahlung ist sehr gering (1% der nominalen Einstrahlung). In diesem Fall bringt es aufgrund des erhöhten Signal/Rausch-Verhältnisses (Messgenauigkeit) nichts, den MPPTm Algorithmus laufen zu lassen.
- Die Primärregelung war schlecht, so dass kaum Leistung ausgegeben wird (der Solargenerator hat das Winkelakzeptanzfenster nicht erreicht).

Sollte die elektrische Leistung aus technischen Gründen, wie z. B. einem Überstrom im Wechselrichter, z. B. aufgrund einer Übertemperatur des Wechselrichters oder einer Vollladung einer Batterie, begrenzt werden, wird der Algorithmus vorzugsweise ebenfalls gestoppt. In diesem Fall können keine zuverlässigen Informationen aus dem Leistungsvergleich gewonnen werden, da die Leistung elektronisch begrenzt wurde und sich nicht mehr alleine aus der mechanischen Tracker-Bewegung ergibt.

Gemäß einem bevorzugten Ausführungsbeispiel der vorliegenden Erfindung erfolgt die Positionierung jeder Drehachse des Trackers nach der maximalen elektrischen Leistung immer in die gleiche Bewegungsrichtung wie die Sonne. Es werden vorzugsweise die Motoramsteuerimpulse entweder kürzer definiert bzw. seltener herausgegeben, falls die Tracker-Position einen gewissen Vorsprung zur Sonnenposition hat, oder im Gegenteil länger definiert bzw. öfters ausgegeben, falls die Tracker-Position der Sonnenposition nacheilt.

Vorzugsweise werden Schritte zurück vermieden, so dass die Fahrrichtungen immer mit der Sonnenbewegungsrichtung übereinstimmen. Für ein zweiachsiges System wird der Azimutwinkel immer nach Westen gedreht, und der Elevationswinkel jeweils Richtung Zenit am Vormittag und Richtung Horizont am Nachmittag gedreht.

Sofern die Positionsregelung unter Verwendung von kontinuierlich angetriebenen Motoren arbeitet, würden die Motoren entsprechend abgebremst oder beschleunigt, auf eine Drehrichtungsänderung würde jedoch auch verzichtet. Das Vermeiden des Zurückfahrens ist vorteilhaft, um unerwünschte temporäre Schwankungen oder kontinuierliche Oszillationen um den maximalen Leistungspunkt zu verhindern. Ferner wird hierdurch das gesamte System und vor allem die Motoren vor einem unnötigen Hin- und Herfahren geschützt, was zum einen Energie spart und zum anderen die Lebensdauer erhöht.

Grundsätzlich ist das Prinzip der Leistungsmaximierung aber nicht inkompatibel mit einem bidirektionalen Fahren. Im Falle eines Vorsprungs bzw. einer Verschiebung der Tracker-Position zur Sonne beim Systemstart kann vorzugsweise ein solches bidirektionales Verfahren vorgesehen sein, um die Einschwingzeit zur Suche des maximalen Leistungspunktes zu beschleunigen. Hierbei wird der Tracker nach dem ersten Erreichen des Winkelakzeptanzfensters des Solargenerators bidirektional bewegt wird.

In der Beschreibung wurde oben bereits kurz der Unterschied zwischen dem elektronischen MPPT und dem mechanischen MPPT erläutert. In der Regel werden Solarzellen immer mit einem MPPT betrieben, der dafür sorgt, dass diese bei ihrer maximalen Leistung arbeiten, wie es oben erläutert wurde. Dieser sei hier als MPPTe genannt, um eine Verwechslung mit dem erfindungsgemäß beschriebenen mechanischen MPPTm zu vermeiden.

Wird beim erfindungsgemäßen System sowohl ein MPPTe und ein MPPTm (erfindungsgemäßer Ansatz) verwendet, so werden jeweils die Spannung des Solargenerators bzw. die mechanische Position des Trackers variiert. Da jeder dieser beiden Regelungsvorgänge die elektrische Leistung maximieren soll, ist in einem solchen Ausführungsbeispiel vorgesehen, dass sich diese Ansätze gegenseitig nicht beeinflussen bzw. stören. Da die Regelgrößen unterschiedlich sind und sich unter normalen Bedingungen sehr gering gegenseitig beeinflussen, wird vorzugsweise dafür gesorgt, dass beide Regler nicht gleichzeitig ihre Stellgröße variieren. Eine gleichzeitige Variation der Spannung des Solargenerators und der Tracker-Drehachse hätte Auswirkungen auf beide Regler, die nicht ohne weiteres trennbar wären. Neben der gleichzeitigen Veränderung der Trackerposition und der DC-Spannung können auch ungünstig gewählte Laufzeiten bzw. Messbereiche die Trennung der Regler stören, z.B.:

- Das MPPTm Verfahren kann statisch sein und der MPPTe verändert die Spannung während des mechanischen Stillstandes.
- Der MPPTe vergleicht einen Leistungswert vor der mechanischen Bewegung (U=U1) mit einem Wert nach der mechanischen Bewegung (U=U2) und trifft eine falsche Entscheidung zum P=f(U) Verhalten, da P sich aufgrund der mechanischen Bewegung geändert hat.

Infolgedessen ist vorzugsweise eine zeitliche Trennung zwischen MPPTe und MPPTm vorgesehen, die gewährleistet, dass diese nicht gleichzeitig die Stellgrößen variieren. Ein versetzter Betrieb der beiden Regler mit entsprechenden Totzeiten zwischen den Spannungs- bzw. Positionsvariationen ist ausreichend, um eine gegenseitige Beeinflussung der Regler zu vermeiden.

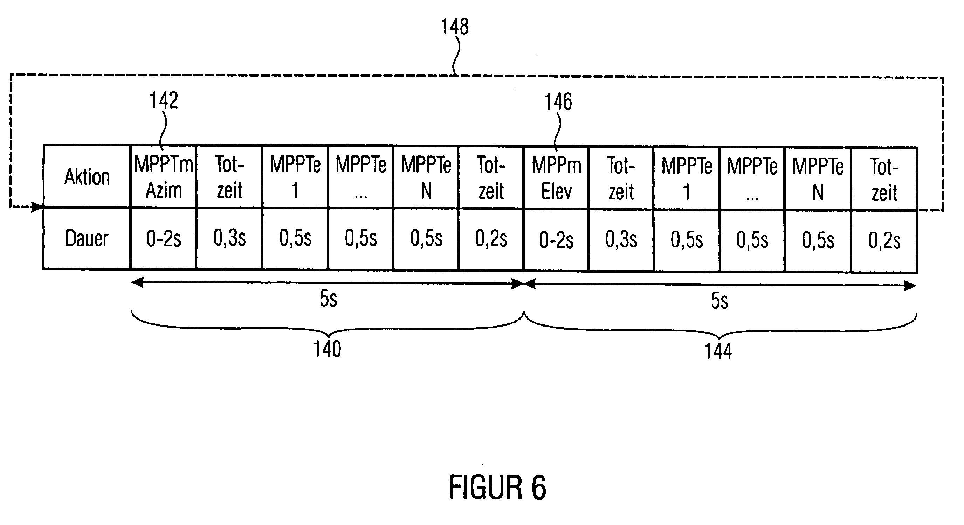

Fig. 6 zeigt ein Beispiel des zeitlichen Verlaufs von MPPTe und MPPTm für einen zweiachsigen Tracker mit Azimut und Elevation. Fig. 6 zeigt den zeitlichen Ablauf der die Einstellung des Azimuts und des Elevationswinkels gemäß den Lehren der vorliegenden Erfindung für eine maximale Leistungsausbeute beschreibt, wobei zwischengeschaltet entsprechende MPPTe-Abschnitte sind, um eine Operation der Solarmodule bei deren maximaler Leistung zu gewährleisten. Die Gesamtzeitdauer für einen Regelzyklus ist 10 Sekunden. Während eines ersten Abschnitts 140 im Zeitbereich 142 erfolgt über eine Zeitdauer von 0 - 2 Sekunden die erforderliche Azimuteinstellung des Trackers durch eine entsprechende Pulsweitenmodulation des/der Antriebsimpuls(e) des Trackermotors zum Nachführen der Solaranlage gemäß den Lehren der vorliegenden Erfindung. Nach einer Totzeit von 0,3 Sekunden erfolgt die MPPTe, die eine Zeitdauer von jeweils 0,5 Sekunden hat. Hieran schließt sich wieder eine Totzeit an. Anschließend an den ersten Abschnitt 140 folgt ein zweiter Abschnitt 144, der wiederum mit dem Abschnitt 146 zur Einstellung des Trackers auf die Sonne, jetzt zur Einstellung des Elevationswinkels unter Verwendung einer entsprechenden Pulsweitenmodulation des/der Antriebsimpuls(e) des Trackermotors zum Nachführen der Solaranlage gemäß den Lehren der vorliegenden Erfindung, startet, wie dies im Abschnitt 146 gezeigt ist. Durch zwei Totzeiten eingerahmt folgen dann die MPPTe-Abschnitte. Dieser Ablauf wiederholt sich, wie durch den Pfeil 148 angedeutet ist.

## Patentansprüche

1. Verfahren zum Nachführen eines Solargenerators (102) mit einer Mehrzahl von Solarmodulen (104) nach der Sonne, mit folgenden Schritten:

   Nachführen eines Trackers (106) nach der Sonne; und
   während einer Bewegung oder eines Stillstandes des Trackers (106), Erfassen (S102) zumindest einer elektrischen Ausgangsgröße zumindest eines Teils der Solarmodule (104) des Solargenerators (102); und
   basierend auf einem Vergleich von zwei Werten der elektrischen Ausgangsgröße oder basierend auf einer Änderung der elektrischen Ausgangsgröße, Bestimmen, ob eine Stellung des Trackers (106) erreicht wurde, in der die elektrische Ausgangsgröße innerhalb eines Bereichs um einen Maximalwert liegt.
   **gekennzeichnet durch** folgenden Schritt:

   falls bestimmt wird, dass eine Stellung des Trackers (106), in der die elektrische Ausgangsgröße innerhalb eines Bereichs um einen Maximalwert liegt, nicht erreicht wurde, Modifizieren eines Ansteuersignals für den Trakker (106), um eine Bewegung des Trackers (106) zu verlangsamen, falls der Tracker (106) an der Stellung, in der die elektrische Ausgangsgröße innerhalb eines Bereichs um einen Maximalwert liegt, vorbeibewegt wurde, und um eine Bewegung des Trackers (106) zu beschleunigen, falls der Trakker (106) die Stellung, in der die elektrische Ausgangsgröße innerhalb eines Bereichs um einen Maximalwert liegt, noch nicht erreicht hat, so dass der Tracker (106) während des Nachfahrens nach der Sonne die Drehrichtung nicht ändert.

2. Verfahren nach Anspruch 1, bei dem das Erfassen der elektrischen Ausgangsgröße folgende Schritte umfasst:

   während einer Bewegung des Trackers (106) von einer ersten Position in eine zweite Position, Erfassen (S102) eines ersten Wertes der elektrischen Ausgangsgröße in einem ersten Abschnitt der Bewegung, und Erfassen eines zweiten Wertes der elektrischen Ausgangsgröße in einem zweiten Abschnitt der Bewegung;
   Vergleichen (S104) des ersten Wertes der elektrischen Ausgangsgröße und des zweiten Wertes der elektrischen Ausgangsgröße miteinander; und

   basierend auf dem Vergleich, falls sich der erste und zweite Wert der elektrischen Ausgangsgröße unterscheiden (S106 - S112), Bestimmen, dass eine Stellung des Trakkers (106), in der die elektrische Ausgangsgröße innerhalb eines Bereichs um einen Maximalwert liegt, nicht erreicht wurde, und falls der erste und der zweite Wert der elektrischen Ausgangsgröße etwa gleich groß sind (S114), Bestimmen, dass eine Stellung des Trackers (106), in der die elektrische Ausgangsgröße innerhalb eines Bereichs um einen Maximalwert liegt, erreicht wurde.

3. Verfahren nach Anspruch 1 oder 2,
   bei dem das Ansteuersignal eine variable Pulsdauer und eine feste Frequenz aufweist, oder
   bei dem das Ansteuersignal eine feste Pulsdauer und eine variable Frequenz aufweist, wobei die feste Pulsdauer von einer erwünschten Positionsgenauigkeit des Solargenerators (102) und/oder einer Suchdauer, bis die elektrische Ausgangsgröße innerhalb eines Bereichs um den Maximalwert liegt, abhängt.

4. Verfahren nach einem der Ansprüche 1 bis 3, mit folgendem Schritt:

   basierend auf Sonnenephemeriden oder unter Verwendung eines Sonnenpositionssensors, Überprüfen, ob die ermittelte relative Position des Trackers (106) zur Sonne richtig ist.

5. Verfahren nach einem der Ansprüche 1 bis 4, das zur Überprüfung der ermittelten Position folgenden Kontrollschritt umfasst:

zu vorbestimmten Zeitpunkten, Durchfahren des gesamten Winkelakzeptanzbereichs des Solargenerators (102), in dem die elektrische Ausgangsgröße vorliegt, und

basierend auf den erfassten Werten der elektrischen Ausgangsgröße während des Durchfahrens, Bestimmen, ob ein lokales oder absolutes Maximum der elektrischen Ausgangsgröße vorliegt.

6. Verfahren nach einem der Ansprüche 1 bis 5, bei dem die Werte der elektrischen Ausgangsgröße während eines ersten und zweiten Abschnitts der Trackerbewegung erfasst werden, oder bei dem die Werte der elektrischen Ausgangsgröße während des ersten und zweiten Abschnitts des Trackerstillstandes erfasst werden, wobei die Wertes an symmetrischen Positionen erfasst werden.

7. Verfahren nach einem der Ansprüche 1 bis 5, bei dem ein Mittelwert, eine Summe, ein Integral, eine Ableitung oder eine sonstige mathematische Funktion der elektrischen Ausgangsgröße verwendet werden.

8. Verfahren nach einem der Ansprüche 1 bis 7, bei dem das Verfahren für die Ansteuerung des Trakkers (106) unterbrochen wird, wenn der Wert der elektrischen Ausgangsgröße unter eine vorbestimmte Schwelle fällt oder wenn die von dem Solargenerator (102) ausgegebene elektrische Ausgangsgröße durch weitere Elemente im Leistungsfluss begrenzt wird, wobei in diesem Fall die Ansteuerung des Trackers (106) nach Sonnenephemeriden oder nach einem Sonnensensor erfolgt.

9. Verfahren nach einem der Ansprüche 1 bis 8, bei dem der Tracker (106) schrittweise oder kontinuierlich bewegt wird, wobei im Fall einer schrittweisen Bewegung die Schritte abhängig von dem Vergleich verkürzt bzw. verlängert oder seltener bzw. öfter bereitgestellt werden, und wobei im Fall einer kontinuierlichen Bewegung der Tracker (106) abgebremst bzw. beschleunigt wird.

10. Verfahren nach einem der Ansprüche 1 bis 9 mit folgendem Schritt:

Durchführen (S100) einer Primärpositionierung des Trackers (106) basierend auf Parametern betreffend eine Sonnenposition.

11. Verfahren nach einem der Ansprüche 1 bis 10 mit folgenden Schritten:

Bereitstellen eines MPP-Trackers, so dass die Solarmodule (104) bei ihrer maximalen Leistung arbeiten,

wobei der Betrieb des MPP-Trackers von der Erfassung der elektrischen Ausgangsgröße und der Ansteuerung des Trackers zeitlich entkoppelt ist.

12. Verfahren nach einem der Ansprüche 1 bis 11, bei dem die elektrische Ausgangsgröße an dem Solargenerator (102), an einem Wechselrichter (108) oder über ein zusätzliches Messgerät (116, 118) erfasst wird.

13. Verfahren nach einem der Ansprüche 1 bis 12, bei dem die elektrische Ausgangsgröße aller Solarmodule (104) erfasst wird.

14. Verfahren nach einem der Ansprüche 1 bis 13, bei dem die Solarmodule (104) Konzentrator-Solarmodule umfassen.

15. Verfahren nach einem der Ansprüche 1 bis 14, bei dem kein zusätzlicher Sonnenpositionssensor bereitgestellt wird.

16. Verfahren nach einem der Ansprüche 1 bis 15, bei dem die elektrische Ausgangsgröße eine Spannung, einen Strom, eine Leistung oder eine Energie oder einen Mittelwert, eine Summe, ein Integral, eine Ableitung oder eine sonstige mathematische Funktion derselben umfasst.

17. Steuerung (120) für eine Solaranlage (100), mit:

einem Eingang (122) zum Empfangen eines Wertes einer elektrischen Ausgangsgröße von zumindest einem Teil von Solarmodulen (104) eines Solargenerators (102) der Solaranlage (100);
einem Ausgang (120) zum Bereitstellen eines Ansteuersignals für einen Tracker (106) der Solaranlage (100); und
einer Verarbeitungseinheit (124), die gemäß dem Verfahren nach einem der Ansprüche 1 bis 16 arbeitet.

18. Solaranlage (100), mit:

einem Solargenerator (102) mit einer Mehrzahl von Solarmodulen;
einem Tracker (106), an dem der Solargenerator (102) angeordnet ist;
einer Messeinrichtung (116, 118) zum Erfassen einer elektrischen Ausgangsgröße von zumindest einem Teil der Solarmodule (104) des Solargenerators (102); und
einer Steuerung gemäß Anspruch 17.

**Claims**

1. Method for tracking a solar generator (102) having a plurality of solar modules (104) to the sun, comprising:

   tracking a tracker (106) to the sun; and
   during movement or standstill of the tracker (106), detecting (S102) at least one electric output quantity of at least part of the solar modules (104) of the solar generator (102); and
   based on a comparison of two values of the electric output quantity or based on a change of the electric output quantity, determining whether a position of the tracker (106) has been reached where the electric output quantity lies within a range around a maximum value,
   **characterized by** the following step:

   if it is determined that a position of the tracker (106) where the electric output quantity lies within a range around a maximum value has not been reached, modifying a control signal for the tracker (106) to decelerate a movement of the tracker (106), if the tracker (106) has been moved past the position where the electric output quantity lies within a range around a maximum value, and to accelerate a movement of the tracker (106) if the tracker (106) has not yet reached the position where the electric output quantity lies within a range around a maximum value, so that the tracker (106) does not change the rotation direction during tracking to the sun.

2. Method according to claim 1, wherein detecting the electric output quantity comprises:

   during a movement of the trackers (106) from a first position to a second position, detecting (S102) a first value of the electric output quantity in a first part of the movement and detecting a second value of the electric output quantity in a second part of the movement;
   comparing (S 104) the first value of the electric output quantity and the second value of the electric output quantity with one another; and
   based on the comparison,
   if the first and second values of the electric output quantity differ (S 106-S 112), determining that a position of the tracker (106) where the electric output quantity lies within a range around a maximum value has not been reached, and
   if the first and second values of the electric output quantity have approximately the same amount (S114), determining that a position of the tracker (106) where the electric output quantity lies within a range around a maximum value has been reached.

3. Method according to claim 1 or 2, wherein the control signal comprises a variable pulse length and a fixed frequency, or
   wherein the control signal comprises a fixed pulse length and a variable frequency, wherein the fixed pulse length depends on a desired position accuracy of the solar generator (102) and/or a search duration until the electric output quantity lies within a range around the maximum value.

4. Method according to one of claims 1 to 3, comprising:

   based on sun ephemerides or by using a sun position sensor, checking whether the determined relative position of the tracker (106) to the sun is correct.

5. Method according to one of claims 1 to 4, comprising the following control step for checking the determined position:

   at predetermined times, passing the whole angle acceptance range of the solar generator (102) where the electric output quantity exists, and
   based on the detected values of the electric output quantity during passing, determining whether a local or absolute maximum of the electric output quantity exists.

6. Method according to one of claims 1 to 5, wherein the values of the electric output quantity are detected during first and second parts of the tracker movement, or wherein the values of the electric output quantity are detected during first and second parts of the tracker standstill, wherein the values are detected at symmetrical positions.

7. Method according to one of claims 1 to 5, wherein an average, a sum, an integral, a derivation or another mathematical function of the electric output quantity are used.

8. Method according to one of claims 1 to 7, wherein the method for controlling the tracker (106) is interrupted when the value of the electric output quantity falls below a predetermined threshold or when the electric output quantity output by the solar generator (102) is limited by further elements in the power flow, wherein in this case controlling the tracker (106) is effected according to sun ephemerides or according to a sun sensor.

9. Method according to one of claims 1 to 8, wherein the tracker (106) is moved incrementally or continuously, wherein in the case of incremental movement, the steps are shortened or lengthened depending on the comparison or provided less or more frequently, and wherein in the case of a continuous movement the tracker (106) is decelerated or accelerated.

10. Method according to one of claims 1 to 9 comprising:

   performing (S100) primary positioning of the tracker (106) based on parameters regarding a position of the sun.

11. Method according to one of claims 1 to 10 comprising:

   providing an MPP tracker, such that the solar modules (104) operate at their maximum power, wherein the operation of the MPP tracker is decoupled in time from detecting the electric output quantity and controlling the tracker.

12. Method according to one of claims 1 to 11, wherein the electric output quantity is detected at the solar generator (102), at an inverter (108) or by means of an additional measuring device (116, 118).

13. Method according to one of claims 1 to 12, wherein the electric output quantity of all solar modules (104) is detected.

14. Method according to one of claims 1 to 13, wherein the solar modules (104) comprise concentrator solar modules.

15. Method according to one of claims 1 to 14, wherein no additional sun position sensor is provided.

16. Method according to one of claims 1 to 15, wherein the electric output quantity comprises voltage, current, power or energy or an average, a sum, an integral, a derivation or another mathematical function of the same.

17. Control (120) for a solar plant (100), comprising:

   an input (122) for receiving a value of an electric output quantity of at least part of the solar modules (104) of a solar generator (102) of the solar plant (100);
   an output (120) for providing a control signal for a tracker (106) of the solar plant (100); and
   a processing unit (124) operating according to the method according to one of claims 1 to 16.

18. Solar plant (100), comprising:

   a solar generator (102) having a plurality of solar modules;
a tracker (106) on which the solar generator (102) is mounted;
a measuring unit (116, 118) for detecting an electric output quantity of at least part of the solar modules (104) of the solar generator (102); and
a control according to claim 17.

**Revendications**

1. Procédé permettant de poursuivre le soleil par un générateur solaire (102) avec une pluralité de modules solaires (104), aux étapes suivantes consistant à:

   poursuivre le soleil par un dispositif de poursuite (106); et
   pendant un déplacement ou un arrêt du dispositif de poursuite (106), détecter (S102) au moins une grandeur de sortie électrique d'au moins une partie des modules solaires (104) du générateur solaire (102); et
   sur base d'une comparaison de deux valeurs de la grandeur de sortie électrique ou sur base d'une variation de la grandeur de sortie électrique, déterminer si une position du dispositif de poursuite (106) a été atteinte dans laquelle la grandeur de sortie électrique se situe dans une plage autour d'une valeur maximale, **caractérisé par** l'étape suivante:

      s'il est déterminé qu'une position du dispositif de poursuite (106) dans laquelle la grandeur de sortie électrique se situe dans une plage autour d'une valeur maximale n'a pas été atteinte, modifier un signal d'activation du dispositif de poursuite (106), pour ralentir un déplacement du dispositif de poursuite (106) si le dispositif de poursuite (106) a été déplacé au-delà de la position dans laquelle la grandeur de sortie électrique se situe dans une plage autour d'une valeur maximale, et pour accélérer un déplacement du dispositif de poursuite (106) si le dispositif de poursuite (106) n'a pas encore atteint la position dans laquelle la grandeur de sortie électrique se situe dans une plage autour d'une valeur maximale, de sorte que le dispositif de poursuite (106) ne modifie pas le sens de rotation pendent la poursuite du soleil.

2. Procédé selon la revendication 1, dans lequel la détection de la grandeur de sortie électrique comporte les étapes suivantes consistant à:

   pendant un déplacement du dispositif de poursuite (106) d'une première position à une deuxième position, détecter (S102) une première valeur de la grandeur de sortie électrique dans un premier segment du déplacement, et détecter une deuxième valeur de la grandeur de sortie électrique dans un deuxième segment du déplacement;

comparer (S104) la première valeur de la grandeur de sortie électrique et la deuxième valeur de la grandeur de sortie électrique entre elles; et sur base de la comparaison, si la première valeur et la deuxième valeur de la grandeur de sortie électrique diffèrent (S106-S112), déterminer qu'une position du dispositif de poursuite (106) dans laquelle la grandeur de sortie électrique se situe dans une plage autour de la valeur maximale n'a pas été atteinte, et

si la première valeur et la deuxième valeur de la grandeur de sortie électrique sont environ identiques (S114), déterminer qu'il a été atteint une position du dispositif de poursuite (106) dans laquelle la grandeur de sortie électrique se situe dans une plage autour d'une valeur maximale.

3.  Procédé selon la revendication 1 ou 2, dans lequel le signal d'activation présente une durée d'impulsion variable et une fréquence fixe, ou dans lequel le signal d'activation présente une durée d'impulsion fixe et une fréquence variable, la durée d'impulsion fixe étant fonction d'une précision de position souhaitée du générateur solaire (102) et/ou d'une durée de recherche jusqu'à ce que la grandeur de sortie électrique se situe dans une plage autour de la valeur maximale.

4.  Procédé selon l'une des revendications 1 à 3, à l'étape suivante consistant à:

    sur base d'éphémérides solaires ou à l'aide d'un capteur de position du soleil, vérifier si la position relative déterminée du dispositif de poursuite (106) du soleil est correcte.

5.  Procédé selon l'une des revendications 1 à 4, qui comporte pour la vérification de la position déterminée l'étape de contrôle suivante consistant à:

    à des moments prédéterminés, parcourir toute la plage d'acceptations d'angle du générateur solaire (102) dans laquelle est présente la grandeur de sortie électrique, et sur base des valeurs détectées de la grandeur de sortie électrique pendant le parcours, déterminer si un maximum local ou absolu de la grandeur de sortie est présent.

6.  Procédé selon l'une des revendications 1 à 5, dans lequel les valeurs de la grandeur de sortie électrique sont détectées pendant un premier et un deuxième segment du déplacement du dispositif de poursuite, ou dans lequel les valeurs de la grandeur de sortie électrique sont détectées pendent le premier et le deuxième segment de l'arrêt du dispositif de poursuite, les valeurs étant détectées à des positions symétriques.

7.  Procédé selon l'une des revendications 1 à 5, dans lequel est utilisée une valeur moyenne, une somme, une intégrale, une dérivation ou une autre fonction mathématique de la grandeur de sortie électrique.

8.  Procédé selon l'une des revendications 1 à 7, dans lequel le procédé est interrompu pour l'activation du dispositif de poursuite (106) lorsque la valeur de la grandeur de sortie électrique descend au-dessous d'un seuil prédéterminé ou lorsque la grandeur de sortie électrique sortie par le générateur solaire (102) est limitée par d'autres éléments dans le flux de puissance, l'activation du dispositif de poursuite (106) ayant lieu dans ce cas selon les éphémérides solaires ou selon un capteur solaire.

9.  Procédé selon l'une des revendications 1 à 8, dans lequel le dispositif de poursuite (106) est déplacé pas à pas ou en continu, les pas étant, dans le cas d'un déplacement pas à pas raccourcis ou allongés ou mis à disposition plus rarement au plus souvent en fonction de la comparaison, et le dispositif de poursuite (106) étant, dans le cas d'un déplacement en continu, freiné ou accéléré.

10. Procédé selon l'une des revendications 1 à 9, à l'étape suivante consistant à:

    réaliser (S100) un positionnement primaire du dispositif de poursuite (106) sur base de paramètres concernant une position du soleil.

11. Procédé selon l'une des revendications 1 à 10, aux étapes suivantes consistant à:

    prévoir un dispositif de poursuite MPP, de sorte que les modules solaires (104) fonctionnent à leur puissance maximale, dans lequel le fonctionnement du dispositif de poursuite MPP est découplé temporellement de la détection de la grandeur de sortie électrique et de l'activation du dispositif poursuite.

12. Procédé selon l'une des revendications 1 à 11, dans lequel la grandeur de sortie électrique est détectée au générateur solaire (102), à un onduleur (108) ou par l'intermédiaire d'un appareil de mesure additionnel (116, 118) .

**13.** Procédé selon l'une des revendications 1 à 12, dans lequel est détectée la grandeur de sortie électrique de tous les modulés solaires (104).

**14.** Procédé selon l'une des revendications 1 à 13, dans lequel les modules solaires (104) comportent des modules solaires à concentrateur.

**15.** Procédé selon l'une des revendications 1 à 14, dans lequel il n'est pas prévu de capteur de position solaire additionnel.

**16.** Procédé selon l'une des revendications 1 à 15, dans lequel la grandeur de sortie électrique comprend une tension, un courant, une puissance ou une énergie ou une valeur moyenne, une somme, une intégrale, une dérivation ou une autre fonction mathématique de ces dernières.

**17.** Commande (120) pour une installation solaire (100), avec:

une entrée (122) pour recevoir une valeur d'une grandeur de sortie électrique d'au moins une partie des modules solaires (104) d'un générateur solaire (102) de l'installation solaire (100); une sortie (120) pour fournir un signal d'activation d'un dispositif de poursuite (106) de l'installation solaire (100); et une unité de traitement (124) qui fonctionne selon le procédé selon l'une des revendications 1 à 16.

**18.** Installation solaire (100), avec:

un générateur solaire (102) avec une pluralité de modules solaires; un dispositif de poursuite (106) sur lequel est disposé le générateur solaire (102); un moyen de mesure (116, 118) destiné à détecter une grandeur de sortie électrique d'au moins une partie des modules solaires (104) du générateur solaire (102); et une commande selon la revendication 17.

FIGUR 1

FIGUR 2

Sonnenverlauf im Azimuth

Einstrahlung    Einstrahlung    Einstrahlung    Einstrahlung

102

FIGUR 3A

1   2   3   4   5   t

Stillstand    Bewegung    Stillstand

PV Leistung

Pmax

$P_{3\_Start}$    $P_{3\_Stop}$

FIGUR 3B    t

EP 2 406 694 B1

EP 2 406 694 B1

Sonnenverlauf im
Azimuth

Einstrahlung    Einstrahlung    Einstrahlung    Einstrahlung

102

FIGUR 3C

102

| 1 | 2 | 3 | 4 | 5 | t |

Stillstand    Bewegung    Stillstand

PV
Leistung

Pmax

$P_{3\_Start}$

$P_{3\_Stop}$

t

FIGUR 3D

**FIGUR 4**

Durchführen einer Primärpositionierung des Trackers basierend auf Informationen über die Position des Trackers und die Position der Sonne zum Zeitpunkt der primärpositionierung — S100

(A)

Erfassen der von dem Solargenerator ausgegebenen Leistung während einer Bewegung des Trackers von einer ersten Position an eine zweite Position — S102

Ist die Leistung P1 bzw. die Energie E1 in einem ersten Abschnitt der Bewegung größer, kleiner oder gleich der Leistung P2 bzw. der Energie E2 in einem zweiten Abschnitt der Bewegung? S104

P1 = P2 bzw. E1 = E2

P1 < P2 bzw. E1 < E2

P1 > P2 bzw. E1 > E2

Position des Trackers mit max. Leistung erreicht S114

Position des Trackers mit max. Leistung liegt an späterer Position S110

Position des Trackers mit max. Leistung liegt an früherer Position S106

Beschleunigen der Bewegung des Trackers S112

Verlangsamen der Bewegung des Trackers S108

(A)

FIGUR 5A

FIGUR 5B

EP 2 406 694 B1

148

142

146

| Aktion | MPPTm Azim | Tot-zeit | MPPTe 1 | MPPTe ... | MPPTe N | Tot-zeit | MPPm Elev | Tot-zeit | MPPTe 1 | MPPTe ... | MPPTe N | Tot-zeit |
|---|---|---|---|---|---|---|---|---|---|---|---|---|
| Dauer | 0-2s | 0,3s | 0,5s | 0,5s | 0,5s | 0,2s | 0-2s | 0,3s | 0,5s | 0,5s | 0,5s | 0,2s |

5s

5s

140

144

FIGUR 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20204679 U1
- DE 102006058845 B3
- ES 2273576 B1
- US 4868379 A